(19) Europäisches Patentamt
European Patent Office
Office européen des brevets

(11) **EP 0 744 681 B1**

(12) **EUROPÄISCHE PATENTSCHRIFT**

(45) Veröffentlichungstag und Bekanntmachung des Hinweises auf die Patenterteilung:
**01.03.2000 Patentblatt 2000/09**

(51) Int Cl.⁷: **G05D 7/01**, F16N 27/00

(21) Anmeldenummer: **96105020.0**

(22) Anmeldetag: **29.03.1996**

(54) **Stromregelventil**

Flow regulator valve

Soupage de régulation de débit

(84) Benannte Vertragsstaaten:
**AT DE ES FR IT**
Benannte Erstreckungsstaaten:
**SI**

(30) Priorität: **20.05.1995 DE 29508440 U**

(43) Veröffentlichungstag der Anmeldung:
**27.11.1996 Patentblatt 1996/48**

(73) Patentinhaber: **Baier & Köppel GmbH & Co.
D-91257 Pegnitz (DE)**

(72) Erfinder: **Pingel, Hans
91257 Pegnitz (DE)**

(74) Vertreter: **Meissner, Bolte & Partner
Anwaltssozietät GbR
Karolinenstrasse 27
90402 Nürnberg (DE)**

(56) Entgegenhaltungen:
**DE-A- 1 498 280        DE-A- 2 241 397
DE-A- 2 807 542        DE-B- 2 008 852
US-A- 3 112 764**

## Beschreibung

Die Erfindung betrifft ein Stromregelventil für ein fließfähiges Medium, beispielsweise einen Schmierstoff, mit einer einstellbaren Meßdrossel und mit einem Differenzdruckregler, der mit Hilfe eines Differenzdruckkolbens eine hiervon in ihrem Querschnitt veränderbare Differenzdruckdrossel auf einen solchen Querschnittwert einstellt, daß das Druckgefälle des Mediums an der Meßdrossel auf einen konstanten Wert gehalten wird, wobei der Differenzdruckregler der Meßdrossel parallel geschaltet ist (Oberbegriff des Anspruches 1). Hiermit wird erreicht, daß das fließfähige Medium, z.B. ein Schmierstoff, aufgrund der konstanten Druckdifferenz an der Meßdrossel mit einer konstanten Menge pro Zeiteinheit fließt. Solche Stromregelventile werden beispielsweise mit einem Schmierstoff für Zentralschmieranlagen verwendet. Als weiteres Anwendungsbeispiel sei der Betrieb von Hydraulikanlagen mit einem Hydrauliköl genannt. Ein Stromregelventil gemäß dem vorgenannten Oberbegriff des Anspruches 1 ist aus DE-OS 22 41 397 bekannt. Die Meßdrossel wird dort von einer Scheibe mit einer dreikantförmigen Öffnung gebildet, die zu einer gehäusefesten Gegenscheibe verdreht werden kann. Je nach Drehlage der die Öffnung aufweisenden Scheibe wird der Durchtrittsquerschnitt dieser Meßdrossel für das Medium geändert. Der Differenzdruckregler (auch Druckwaage genannt) sorgt dafür, daß zwischen Eingang und Ausgang der Meßdrossel stets die gleiche Druckdifferenz besteht. Nachteilig ist hierbei, daß eine Verschmutzung dieser Meßdrossel eine Verringerung des Volumens des durchfließenden Mediums zur Folge hat und daß diese Verschmutzung bei der vorbekannten Anordnung nur dadurch beseitigt werden kann, indem die Anlage abgestellt und das Stromregelventil auseinandergenommen und gereinigt wird.

In einem Druckblatt 0017.10.81 der Firma EUGEN WOERNER GmbH & Co., Am Eichamt 8, 97877 Wertheim, wird ein Volumenstromregler VUA-B beschrieben, bei dem eine aus zwei Meßdrosseln bestehende Meßstrecke und ferner ein Differenzdruckregler (Druckwaage) vorgesehen sind. Zwar wird lt. Angabe in dieser Druckschrift durch eine Anordnung von Drosselkolben eine weitgehende Selbstreinigung der Drosseln erreicht. Wie diese Selbstreinigung vor sich gehen soll, wird allerdings nicht ausgeführt. Nachteilig ist bei dem vorgenannten Volumenstromregler, daß die Druckwaage nicht parallel zum Eingang und Ausgang der Meßstrecke liegt, sondern nur parallel zur ausgangsseitigen Drossel dieser Meßstrecke geschaltet ist. Hiermit kann an der gesamten Meßstrecke nicht die gleiche Druckdifferenz eingehalten werden. Dies entspricht also nicht der Anordnung gemäß Oberbegriff des Anspruches 1, von der die vorliegende Erfindung ausgeht. Hiermit ergibt sich der Nachteil, daß sich bei wechselnden Zu- und/oder Ablaufdrücken mit Lageveränderung des Druckwaagekolbens auch kurzzeitig die Lage des Kolbens für die Meßdrosselstrecke verändert, bewirkt dadurch, daß sich die Druckänderungen bis zum Erreichen der Druckwaage erst auf den Kolben der Meßdrosselstrecke auswirken. Dies hat wechselnde Volumenstromschwankungen zur Folge. Weitere Nachteile bestehen darin, daß die beiden Meßdrosseln von den Stirnkanten eines Regelkolbens und Gegenstirnkanten des Gehäuses gebildet wird. Dies ist strömungstechnisch außerordentlich ungünstig, da durch eine Verengung der Drosselstrecke in Strömungsrichtung des fließenden Mediums eine erhöhte Viskositätsabhängigkeit entsteht. Außerdem ist der Raumbedarf dieses Volumenstromreglers VUA-B relativ groß.

Die Aufgaben- bzw. Problemstellung der Erfindung besteht demgegenüber zunächst darin, ein Stromregelventil gemäß der Anordnung des Oberbegriffes des Anspruches 1 dahingehend zu verbessern, daß beim Festsetzen von Verunreinigungen in der Meßdrossel diese selbsttätig vom Medium ausgespült werden können.

Die Lösung dieser Aufgabe wird zunächst, ausgehend vom Oberbegriff des Anspruches 1 gemäß dessen Kennzeichen darin gesehen, daß die zum Differenzdruckregler parallel geschaltete Meßdrossel eine aus zwei im Abstand voneinander befindlichen Meßdrosseln bestehende Meßdrosselstrecke ist, daß jede dieser Meßdrosseln eine in ihrem Querschnitt veränderbare Durchtrittsöffnung für das Medium aufweist und daß ein Regelteil vorgesehen ist, das mit Hilfe des innerhalb der Meßdrosselstrecke herrschenden Druckes des Mediums verstellbar ist, wobei das Regelteil entsprechend seiner Stellage die Durchtrittsquerschnitte beider Meßdrosseln verändert. Es ist zum einen gesichert, daß die Druckdifferenz zwischen Eingang und Ausgang der Meßdrosselstrecke mittels Hilfe des Differenzdruckreglers konstant gehalten wird, daß aber andererseits eine durch das Festsetzen einer Verunreinigung in dem Durchtrittsquerschnitt einer der Meßdrosseln ergebende Druckänderung in der Meßdrosselstrecke eine entsprechende Verschiebung des Regelteils zur Folge hat. Diese Verschiebung des Regelteiles bewirkt eine Vergrößerung desjenigen Durchtrittsquerschnittes, der durch eine solche Verunreinigung bisher zugestopft oder zumindest in seinem Querschnitt verringert worden war. Aufgrund dieser Erweiterung des vorgenannten Durchtrittsquerschnittes kann die darin festgesetzte Verunreinigung durch den Fluß des Mediums herausgespült werden, wie dies anhand der bevorzugten Ausführungsform nach Anspruch 2 nachfolgend näher erläutert wird.

In einer weiteren Aufgabenstellung der Erfindung soll der vorgenannte Effekt bei einem strömungsgünstigen Fließen des Mediums ermöglicht werden. Hierzu ist in der bevorzugten Ausführungsform der Erfindung gemäß Anspruch 2 vorgesehen, daß in der Wandung eines, einen Hohlraum aufweisenden, den Regelteil bildenden Regelkolbens zwei Öffnungen vorgesehen sind, wobei diese Öffnungen in der Längsrichtung des Regelkolbens einen Abstand voneinander aufweisen, daß hiervon eine erste Öffnung den Zufluß des Mediums in die Meßdrosselstrecke mit dem Hohlraum des Regelkolbens verbindet, während die zweite Öffnung den Hohlraum des Regelkolbens mit dem Abfluß des Mediums aus der Meßdrosselstrecke verbindet, daß der Regelkolben in seiner Längsrichtung verschiebbar an gehäusefesten Führungen gelagert ist, die zusammen mit den Öffnungen die beiden Meßdrosseln bilden, wobei jede der Führungen entsprechend der Verschiebelage des Regelkolbens die zu ihr gehörende Öffnung freigibt, teilweise sperrt oder ganz sperrt, und daß Mittel vorgesehen sind, mit denen die Verschiebelage des Regelkolbens sich entsprechend der Druckdifferenz des Mediums zwischen den beiden Meßdrosseln einstellt. Wird beispielsweise der Durchtrittsquerschnitt der eingangsseitigen Meßdrossel der Strecke durch das Festsetzen einer Verunreinigung des Mediums verringert, so strömt dort weniger Medium pro Zeiteinheit hindurch als zuvor. Dies bedeutet, daß der Druck des abfließenden Mediums geringer wird. Dies hat eine entsprechende Verschiebung des Regelkolbens in Richtung des abfließenden Mediums zur Folge. Hierdurch wird der Durchtrittsquerschnitt der verschmutzten Meßdrossel vergrößert und das nachströmende Medium kann die Verunreinigungen wegschwemmen. Die gleiche Wirkung wird erreicht, wenn die ausgangsseitige, d.h. die in Richtung des abfließenden Mediums liegende Meßdrossel ihren Durchtrittsquerschnitt aufgrund von Verunreinigungen verringert. Dies bewirkt eine Verschiebung des Regelkolbens in Richtung zum zufließenden Medium, da sich der Druck vor der Drossel erhöht. Der Durchtrittsquerschnitt der ausgangsseitigen Meßdrossel wird vergrößert und das Medium kann die Verunreinigungen wegspülen. Strömungstechnisch besteht der Vorteil, daß die Öffnungen in der Wandung des Regelkolbens relativ kurze und strömungstechnisch günstige Drosselstrecken bilden, so daß diese Anordnung nach der Erfindung im wesentlichen unabhängig von der Viskosität des fließenden Mediums ist und arbeiten kann. Die günstige Strömung wird im Gegensatz zu der eingangs erläuterten Ausführung der WOERNER dadurch erreicht, daß das Medium über sich überschneidende Kanten einer vorzugsweise in Dreiecksform ausgebildeten Drossel, mit Eingangs- und Ausgangsdrosselstrecke fließt, wobei die Drosselstrecken extrem kurz sind. Hierdurch wird eine weitgehende Viskositätsunabhängigkeit erreicht. Auch ergeben sich in baulicher Hinsicht Vorteile und Vereinfachungen.

Aus DE-AS 2 008 852 ist ein als Drossel bezeichnetes Druckminderventil bekannt, bei dem die Durchflußmenge einer Flüssigkeit proportional zum Druck der abfließenden Flüssigkeit ist. Mittels eines verschiebbaren Kolbens, der an einem Ende eine Verjüngung aufweist, wird bei einer druckproportionalen Verschiebung des Kolbens der Durchflußquerschnitt geändert. Ein solches Druckminderventil erfüllt zunächst nicht die Merkmale des Oberbegriffes des Anspruches 1, der sich auf das Zusammenwirken einer einstellbaren Meßdrossel und eines Differenzdruckreglers bezieht, womit das Druckgefälle des Mediums an der Meßdrossel auf einem konstanten Wert gehalten wird. Vielmehr ist diese konstante Druckdifferenz beim Gegenstand dieser Entgegenhaltung nicht einhaltbar. Während bei dieser Vorveröffentlichung die Durchflußmenge der Flüssigkeit proportional zum Druck der abfließenden Flüssigkeit ist, ist mit der Erfindung immer der gleiche Volumenstrom gegeben, auch wenn sich die absoluten Werte des Eingangsdruckes und des Ausgangsdruckes für sich ändern. Es ist zwar beim Gegenstand von DE-AS 2 008 852 eine gewisse Öffnung des Durchtrittsquerschnittes durch eine Verlagerung des Kolbens gegeben, womit etwaige Verschmutzungen weggespült werden können, doch ist gemäß Vorstehendem im übrigen keine Gemeinsamkeit mit der vorliegenden Erfindung und deren Stromregelfunktion vorhanden.

Weitere Merkmale und Vorteile der Erfindung sind sowohl den Unteransprüchen, auf deren Inhalt hiermit ausdrücklich Bezug genommen wird, als auch auf den nachfolgend anhand der Beschreibung und der Zeichnung erläuterten Ausführungsmöglichkeiten der Erfindung zu entnehmen. Die im wesentlichen schematische und sich auf die zum Verständnis der Erfindung notwendigen Bauteile konzentrierende Zeichnung zeigt:

Fig. 1 bis 3:      im Längsschnitt eine Anordnung nach der Erfindung bei gleicher Einstellung des Volumens der Meßdrosselstrecke in unterschiedlichen Betriebslagen,

Fig. 4 und 5:      die Anordnung nach den Fig. 1 bis 3 ebenfalls im Längsschnitt, jedoch mit unterschiedlichen Einstellungen des Volumens der Meßdrosselstrecke,

Fig. 6:      im vergrößerten Maßstab den Regelkolben mit Führungen, zum Teil im Längsschnitt,

Fig. 7:      eine Draufsicht auf Fig. 6 in Richtung des Pfeiles VII.

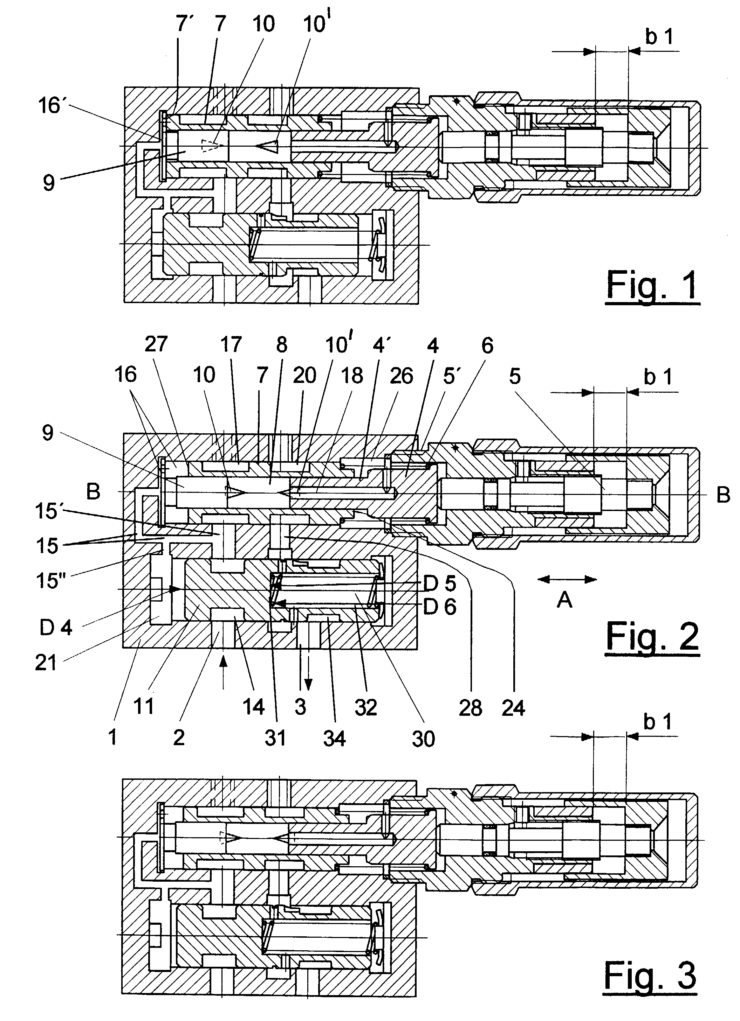

Die Schnittdarstellungen der Fig. 1 bis 5 betreffen jeweils die baulich gleiche Anordnung, zeigen sie jedoch in unterschiedlichen Funktionsstellungen. Die Erfindung sei zunächst anhand der Fig. 2 erläutert. Die darin verwendeten Bezugsziffern gelten auch für dieselben Bauteile in den Fig. 1, 3 bis 5.

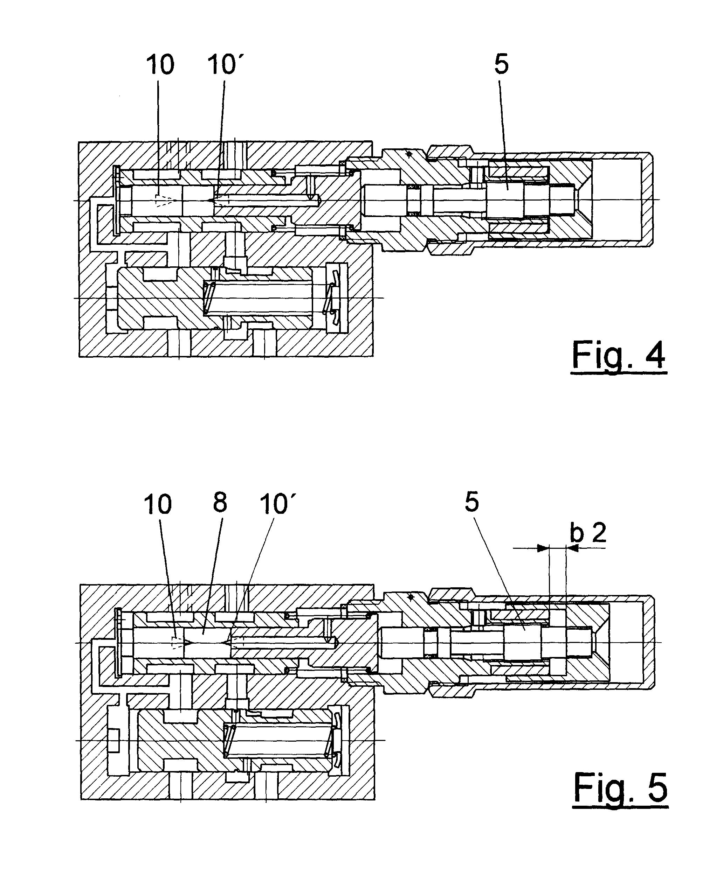

Dieses Ausführungsbeispiel der Erfindung besitzt ein Gehäuse 1 mit einem Zufluß 2 und einem Abfluß 3 des fließfähigen Mediums, z.B. eines Schmierstoffes. Es ist ein Stellkolben 4 vorgesehen, der von einer Einstellschraube 5 in Richtung des Doppelpfeiles A gegen, bzw. unter Wirkung einer Feder 6 verschiebbar ist. Hiermit wird die Größe eines Hohlraumes 8 innerhalb eines Regelkolbens 7 verändert, wie es sich aus einem Vergleich der Fig. 3 einerseits mit Fig. 4 und Fig. 5 andererseits ergibt. Hierzu wird auch auf die Erläuterungen zu den Fig. 4 und 5 verwiesen.

In eine auch den Hohlraum 8 bildende Innenbohrung des Regelkolbens 7 greifen als Führungen dieses Regelkolbens ein gehäusefester Festkolben 9 einerseits und ein hohlzylindrischer Ansatz 4' des Stellkolbens 4 ein. Der Stellkolben 4 ist ebenfalls gehäusefest, kann aber mit Hilfe der Schraubverstellung 5 und des Gewindes 5' in seiner Lage relativ zum Gehäuse 1 in der Längsrichtung B-B des Regelkolbens 7 und damit des Doppelpfeiles A verlagert werden.

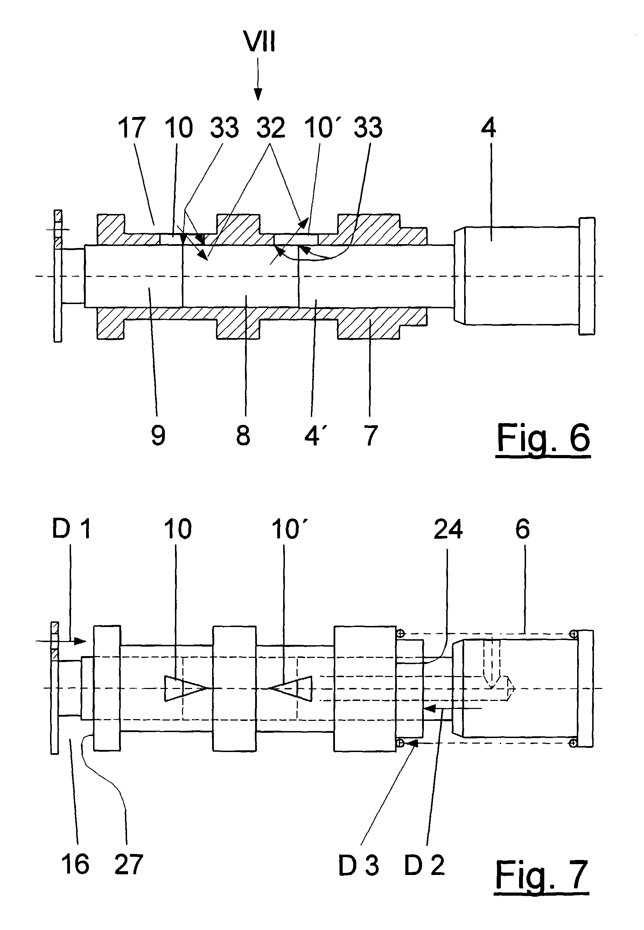

In der Wandung des hohlzylindrischen Regelkolbens 7 sind zwei Öffnungen 10, 10' vorgesehen (siehe hierzu auch die Fig. 6, 7), die zusammen mit dem Festkolben 9 und dem Ansatz 4' jeweils eine Meßdrossel bilden. Der Stromfluß des Mediums vom Zulauf 2 über die Meßdrossel und einen Differenzdruckregler bis zum Abfluß 3 ist bei dieser bevorzugten Ausführungsform der Erfindung wie folgt:

Das bei 2 einfließende Medium fließt über einen ersten Ringraum 14 und eine Leitung 15' in einen zweiten Ringraum 17, sowie über die Leitung 15 in eine Druckkammer 16. Das in der Druckkammer 16 bzw. einen zunächst schmalen Spalt 16' (siehe Fig. 1) dieser Druckkammer befindliche, unter Druck stehende Medium drückt auf die an den Raum 16 angrenzende Stirnfläche 7' des Regelkolbens 7 und damit den Regelkolben 7 aus der Ausgangslage gemäß Fig. 1, in der noch kein unter Druck zufließendes Medium vorhanden ist, in eine erste Betriebsstellung gemäß Fig. 2. Hiermit ist der Regelkolben 7 soweit nach rechts verschoben, daß der in Fig. 2 mit durchgezogenen Linien dargestellte Bereich der Öffnung 10 einen Durchtrittsquerschnitt für das aus dem Ringraum 17 her strömende Medium bildet. Das Medium gelangt dann in den Hohlraum 8 innerhalb des Regelkolbens 7 und von dort durch den ebenfalls mit durchgezogenen Linien umgebenen Querschnitt der Öffnung 10' in einen dritten Ringraum 20, der ebenso wie der Ringraum 17 den Regelkolben 7 umgibt. Während bei der Stellung des Regelkolbens 7 in Fig. 1 noch kein Medium durch die Meßdrosseln fließen kann (der Durchtritt durch die Öffnung 10 ist durch den Führungskolben 9 noch verschlossen), fließt jetzt das Medium zum einen, wie erläutert, in den Ringraum 20 und ferner durch eine Bohrung 18 des Ansatzes 4' in einen vierten Ringraum 26. Das sich im Ringraum 26 befindende Medium drückt gegen eine ringförmige Stirnfläche 24 des Regelkolbens 7. Ferner wirkt auf diese Stirnfläche der Druck der Feder 6. Aus zeichnerischen Gründen sind die entstehenden Drücke in Fig. 7 eingezeichnet, nämlich:

    a) vom zufließenden Medium Druck D1 auf die eingangsseitige Stirnfläche 27 des Regelkolbens 7,

    b) vom abfließenden Medium Druck D2 auf die ausgangsseitige Stirnfläche 24 des Regelkolbens 7,

    c) von der Feder 6 Druck D3 ebenfalls auf die vorgenannte Stirnfläche 24.

Dabei sind die Druckrichtungen D2 und D3 der Druckrichtung D1 entgegengesetzt. Es gilt also für die sich einstellende Position des Regelkolbens 7 in seiner Längsrichtung B-B die Formel

$$D1 = D2 + D3$$

Wie bereits erwähnt und nachstehend noch näher erläutert sorgt der Differenzdruckregler für eine konstante Druckdifferenz zwischen Eingang und Ausgang der vorstehend erläuterten Meßdrosselstrecke. Angenommen es wird der Querschnitt der Öffnung 10 durch eine Verunreinigung des Mediums teilweise zugesetzt und damit der effektive Durchtrittsquerschnitt für das Medium entsprechend verringert, so hat dies zur Folge, daß sich in dem Hohlraum 8 und somit über die Bohrung 18 und den Ringraum 20 auf die ringförmige Stirnfläche 24 des Regelkolbens 7 der Druck D2 verringert. Dies hat zur Folge, daß der Regelkolben 7 in Richtung zur Ausgangsseite, d.h. in der Darstellung der Zeichnungen (siehe z.B. Fig. 7), gegen die Federkraft D3 so weit nach rechts hin verschoben wird, bis der Druck D2 sich so weit erhöht hat, daß wieder

$$D1 = D2 + D3$$

ist. Damit wird der Durchtrittsquerschnitt der Öffnung 10 entsprechend vergrößert und das durchfließende Medium kann die Verunreinigung wegschwemmen.

Wenn jedoch die Öffnung 10' verschmutzt sein sollte tritt der o.g. Effekt in der umgekehrten Richtung ein, d.h. der Druck D2 erhöht sich und der Regelkolben 7 bewegt sich durch die Kraft der Feder D3 in Richtung Eingangsseite nach links hin. Der Durchtrittsquerschnitt der Öffnung 10' wird größer, so daß das fließende Medium die Verunreinigungen wegschwemmen kann. Zugleich wird der Durchtrittsquerschnitt der Öffnung 10 kleiner. Schließlich stellt sich auch hier das Gleichgewicht

$$D1 = D2 + D3$$

bei entsprechender Positionierung des Regelkolbens 7 ein. Es wird schließlich über das Zwischenstadium der Fig. 2 die ausgeglichene Position des Regelkolbens 7 gemäß Fig. 3 erreicht, in der die Druckdifferenz der Meßstrecke ausgeglichen ist. Die Öffnungen 10 und 10' haben denselben effektiven Durchtrittsquerschnitt.

Das zufließende Medium gelangt aus dem ersten Ringraum 14 und dem Beginn der Leitung 15 über eine Abzweigung 15" in einen Raum 21 und drückt dort gemäß dem Pfeil D4 auf die Stirnseite des im Gehäuse 1 verschiebbar gelagerten Kolben des Differenzdruckreglers 11. Das aus der Meßdrosselstrecke in den dritten Ringraum 20 austretende Öl fließt über eine Leitung 28 und eine Bohrung 29 in einen Raum 30, in dem es gemäß Pfeil D5 auf die andere Stirnseite 31 des Kolbens des Differenzdruckreglers 11 drückt. Ferner ist eine Druckfeder 32 vorgesehen, die gemäß dem Pfeil D6 ebenfalls auf die Stirnseite 31 drückt. Hier gilt für das Gleichgewicht der vorgenannten Kräfte und damit den Halt des Differenzdruckkolbens 11 in der jeweiligen Position die Gleichung:

$$D4 = D5 + D6.$$

Der von der Feder ausgeübte Druck 6 bestimmt in Abhängigkeit von den Druckgrößen D4 und D5 die jeweilige Position des Differenzdruckkolbens 11.

Während in den Darstellungen der Fig. 1 bis 3 mittels der Stellschraube 5 der Stellkolben 4 mit seinem Ansatz 4' so positioniert ist, daß das Volumen des Hohlraumes 8 relativ groß ist (Einstellung b1 der Stellschraube in den Fig. 1 bis 3), ist demgegenüber im Ausführungsbeispiel der Fig. 5 das Volumen des Hohlraumes 8 kleiner eingestellt (Einstellung b2 in Fig. 5), so daß im Vergleich zu Fig. 3 nur ein demgegenüber kleinerer Durchtrittsquerschnitt der Öffnungen 10, 10' für den Durchtritt des Mediums zur Verfügung steht. Bei der Stellung der Stellschraube 5 gemäß Fig. 4 steht überhaupt kein Querschnitt der Öffnungen 10, 10' für den Durchtritt des Mediums mehr zur Verfügung. Dies ist die Volumen- Nullstellung. Danach erfolgt der Beginn der Regelung mit Druck des zufließenden Mediums.

Aus Fig. 6 ist ferner die Kantenströmung 32 des Mediums entlang der Kanten 33 des Regelkolbens 7 ersichtlich. Aus der Darstellung ersichtlich wird durch die überschneidende Anordnung der Drosseln im Regelkolben zu den Kanten der Fest- und Stellkolben eine extrem kurze Drosselstrecke erreicht, die das Gerät weitgehend viskositätsunabhängig macht. Ein großer Querschnitt zwischen den Meßdrosseln mit kurzen Strömungswegen hält den strömungsbedingten Druckverlust gering.

Wie die Zeichnungen zeigen, kann die Kürze der Drosselstrecken durch Ausbildung der Öffnungen 10, 10' in entsprechender Dreiecksform erzielt werden. Dies ist eine bevorzugte, jedoch nicht ausschließliche Ausführungsform der Erfindung.

Der Differenzdruckregler 11 und die Drosselmeßstrecke 9, 10; 4, 10' können sich übereinander befinden. Damit wird an Baulänge gespart.

Alle dargestellten und beschriebenen Merkmale, sowie ihre Kombinationen miteinander, sind erfindungswesentlich.

**Patentansprüche**

1. Stromregelventil für ein fließfähiges Medium, beispielsweise einen.Schmierstoff, mit einer einstellbaren Meßdrossel (9, 10; 4, 10') und mit einem Differenzdruckregler (11), der mit Hilfe eines Differenzdruckkolbens eine hiervon in ihrem Querschnitt veränderbare Differenzdruckdrossel auf einen solchen Querschnittswert einstellt, daß das Druckgefälle des Mediums an der Meßdrossel auf einen konstanten Wert gehalten wird, wobei der Differenzdruckregler (11) der Meßdrossel parallel geschaltet ist, dadurch gekennzeichnet, daß die zum Differenzdruckregler (11) parallel geschaltete Meßdrossel eine aus zwei im Abstand voneinander befindlichen Meßdrosseln (9, 10; 4, 10') bestehende Meßdrosselstrecke ist, daß jede dieser Meßdrosseln eine in ihrem Querschnitt veränderbare Durchtrittsöffnung (10, 10') für das Medium aufweist und daß ein Regelteil (7) vorgesehen ist, das mit Hilfe des innerhalb der Meßdrosselstrecke herrschenden Druckes des Mediums verstellbar ist, wobei das Regelteil entsprechend die Durchtrittsquerschnitte an beiden Meßdrosseln verändert.

2. Stromregelventil nach Anspruch 1, dadurch gekennzeichnet, daß in der Wandung eines einen Hohlraum (8) aufweisenden, den Regelteil bildenden Regelkolbens (7) zwei Öffnungen (10, 10') vorgesehen sind, wobei diese Öffnungen in der Längsrichtung (B-8) des Regelkolbens einen Abstand voneinander aufweisen, daß hiervon eine erste Öffnung (10) den Zufluß (2, 15) des Mediums in die Meßdrosselstrecke mit dem Hohlraum des Regelkolbens verbindet, während die zweite Öffnung (10') den Hohlraum des Regelkolbens mit dem Abfluß (28, 3) des Mediums aus der Meßdrosselstrecke verbindet, daß der Regelkolben in seiner Längsrichtung verschiebbar an gehäusefesten Führungen (9, 4') gelagert ist, die zusammen mit den Öffnungen (10, 10') die beiden Meßdrosseln bilden, wobei jede der Führungen entsprechend der Verschiebelage des Regelkolbens die zu ihr gehörende Öffnung freigibt, teilweise sperrt oder ganz sperrt, und daß Mittel vorgesehen sind, mit denen die Verschiebelage des Regelkolbens sich entsprechend der Druckdifferenz des Mediums zwischen den beiden Meßdrosseln einstellt.

3. Stromregelventil nach Anspruch 2, dadurch gekennzeichnet, daß der Regelkolben (7) an einer Stirnseite (27) vom Druck D1 des zufließenden Mediums (2, 15) und an der anderen Stirnseite (24) von dem entgegengesetzt gerichteten Druck D2 des abfließenden Mediums und von einer Druckfeder (6) mit einem Druck D3 beaufschlagt ist, wobei aufgrund der Längsverschieblichkeit des Regelkolbens (7) sich dessen Lage entsprechend der Größe der auf ihn wirkenden Drücke D1, D2, D3 nach der Gleichung

$$D1 = D2 + D3$$

einstellt.

4. Stromregelventil nach einem der Ansprüche 1 bis 3, dadurch gekennzeichnet, daß der Differenzdruckregler (11) einerseits über eine Zuleitung (15") mit dem zufließenden Medium (2) unter Druck D4 beaufschlagt ist, wobei diese Zuleitung (15") von der Leitung (15) zwischen dem Zufluß (2) und der ersten Meßdrossel (9, 10) abgezweigt ist, und daß der Differenzdruckregler an seiner anderen Stirnseite unter dem Druck D5 des abfließenden (28, 3) Mediums und dem Druck D6 einer Druckfeder (30) steht, wobei der Kolben des Differenzdruckreglers (11) zum Gehäuse (1) unter der Einwirkung der vorgenannten Drücke D4, D5 und D6 in seiner Längsrichtung verschiebbar ist, bis sich die Gleichgewichtslage des Kolbens nach der Gleichung

$$D4 = D5 + D6$$

einstellt.

5. Stromregelventil nach einem der Ansprüche 2 bis 4, dadurch gekennzeichnet, daß die Führungen des Regelkolbens (7) ein an der Eingangsseite des Mediums befindlicher, am Gehäuse (1) angebrachter Festkolben (9) und ferner ein hohlzylindrischer Ansatz (4') eines Stellkolbens (4) sind, wobei der Stellkolben (4) in der Gebrauchslage ebenfalls gehäusefest ist, jedoch mit Hilfe einer Schraubverstellung (5, 5') in der Längsrichtung (B-B) des Regelkolbens (7) zum Gehäuse verstellbar ist.

6. Stromregelventil nach einem der Ansprüche 1 bis 5, dadurch gekennzeichnet, daß von der Zuleitung (15) des Mediums ein weiterer Leitungszweig (15') abzweigt, der, bevorzugt über einen ersten, den Differenzdruckregler umgebenden Ringraum (14), in einen den Regelteil (7) umgebenden zweiten Ringraum (17) mündet, wobei die zugehörige Öffnung (10) der ersten Meßdrossel (9, 10) einen Flüssigkeitsdurchtritt zwischen dem Hohlraum (8) des Regelkolbens und dem zweiten Ringraum (17) bildet.

7. Stromregelventil nach einem der Ansprüche 1 bis 6, dadurch gekennzeichnet, daß die Öffnung (10') der ausgangsseitigen Meßdrossel (4, 10') mit einem dritten Ringraum (20) in Verbindung steht, der das Regelteil (7) umgibt und mit dem Abfluß (28) des Mediums zum Differenzdruckregler (11) verbunden ist.

8. Stromregelventil nach einem der Ansprüche 2 bis 7, dadurch gekennzeichnet, daß der Hohlraum (8) des Regelkolbens (7) über eine Durchtrittsbohrung (24) im Ansatz (4') des Stellkolbens (4) mit einem weiteren, vierten Ringraum (26) verbunden ist, und daß das Medium innerhalb dieses Ringraumes mit dem oben genannten Druck D2 an der an den Regelraum (26) angrenzenden Stirnseite (24) des Regelkolbens anliegt.

9. Stromregelventil nach einem der Ansprüche 1 bis 8, dadurch gekennzeichnet, daß der Differenzdruckregler (11) sich unterhalb der Drosselmeßstrecke (9, 10; 4, 10') befindet, wobei der Zufluß (2) und der Abfluß (3) jeweils über den ersten Ringraum (14) und über einen weiteren, fünften Ringraum (34) des Differenzdruckreglers mit der Drosselmeßstrecke in Fließverbindung stehen.

10. Stromregelventil nach einem der Ansprüche 1 bis 9, dadurch gekennzeichnet, daß die Durchtrittsöffnungen (10, 10') der Meßdrosseln (9, 10; 4, 10') in Längsrichtung des Regelkolbens (7) langgestreckt sind und bevorzugt in Richtung zur Mitte des Regelkolbens (7), d.h. in Richtung zur Mitte des von ihm umgebenen Hohlraumes (8) hin konisch zusammenlaufen.

**Claims**

1. A flow regulator valve for a free-flowing medium, for example a lubricant, having an adjustable metering restrictor (9, 10; 4, 10') and having a differential pressure regulator (11), which by means of a differential pressure piston adjusts a differential pressure restrictor with an adjustable cross section to such a cross-sectional value that the pressure drop in the medium at the metering restrictor is kept at a constant value, the differential pressure regulator (11) of the metering restrictor being connected in parallel,

   **characterised in that** the metering restrictor connected in parallel to the differential pressure regulator (11) is a metering restrictor section consisting of two metering restrictors (9, 10; 4, 10') spaced from one another,

   **in that** each of these metering restrictors comprises a through-aperture (10, 10') with an adjustable cross section for the medium,
   **and in that** a regulating part (7) is provided, which is adjustable by means of the pressure of the medium prevailing inside the metering restrictor section, the regulating part accordingly changing the passage areas at both metering restrictors.

2. A flow regulator valve according to Claim 1, **characterised in that** two apertures (10, 10') are provided in the walls of a regulating piston (7) having a cavity (8) and forming the regulating part (7), these apertures being spaced from one another in the longitudinal direction (B-B) of the regulating piston,

in that of said apertures a first aperture (10) connects the inflow (2, 15) of the medium into the metering restrictor section with the cavity of the regulating piston, while the second aperture (10') connects the cavity of the regulating piston with the outflow (28, 3) of the medium from the metering restrictor section,
in that in its longitudinal direction the regulating piston is displaceably mounted on guides (9, 4') fixed to the housing, which together with the apertures (10, 10') form the two metering restrictors, each of the guides unblock, partially block or completely block the aperture belonging thereto according to the displacement position of the regulating piston,
and in that means are provided with which the displacement position of the regulating piston is set according to the pressure difference of the medium between the two metering restrictors.

3. A flow regulator valve according to Claim 2, **characterised in that** the regulating piston (7) is impinged on one end side (27) by the pressure D1 of the inflowing medium (2, 15) and at the other end side (24) by the oppositely directed pressure D2 of the outflowing medium and by a pressure spring (6) with a pressure D3, whereby by virtue of the longitudinal displaceability of the regulating piston (7) its position is adjusted according to the magnitude of the pressures D1, D2, D3 acting thereon in accordance with the equation

$$D1 = D2 + D3.$$

4. A flow regulator valve according to one of Claims 1 to 3, **characterised in that** the differential pressure regulator (11) is pressurised firstly via a supply line (15") with the inflowing medium (2), this supply line (15") being branched from the line (15) between the inflow (2) and the first metering restrictor (9, 10), **and in that** the differential pressure regulator at its other end side is subject to the pressure D5 of the outflowing (28, 3) medium and the pressure D6 of a pressure spring (30), the piston of the differential pressure regulator (11) being displaceable in its longitudinal direction to the housing (1) under the action of the above-mentioned pressures D4, D5 until the equilibrium position of the position is set according to the equation

$$D4 = D5 + D6.$$

5. A flow regulator valve according to one of Claims 2 to 4, **characterised in that** the guides of the regulating piston (7) are a fixed piston (9) situated at the inlet side of the medium and mounted on the housing (1) and also a hollow cylindrical projection (4') of a operating piston (4), the operating piston (4) also being fixed to the housing in the position of use, but being adjustable by means of a screw adjustment (5, 5') in the longitudinal direction (B-B) of the regulating piston (7) to the housing.

6. A flow regulator valve according to one of Claims 1 to 5, **characterised in that** branching from the supply line (15) of the medium is another line branch (15'), which opens, preferably via a first annular space (14) surrounding the differential pressure regulator, into a second annular space (17) surrounding the regulating part (7), the associated aperture (10) of the first metering restrictor (9, 10) forming a fluid passageway between the cavity (8) of the regulating piston and the second annular space (17).

7. A flow regulator valve according to one of Claims 1 to 6, **characterised in that** the aperture (10') of the output-side metering restrictor (4, 10') communicates with a third annular space (20), which surrounds the regulating part (7) and is connected with the outflow (28) of the medium to the differential pressure regulator (11).

8. A flow regulator valve according to one of Claims 2 to 7, **characterised in that** the cavity (8) of the regulating piston (7) is connected via a throughbore (24) in the projection (4') of the operating piston (4) with another, fourth annular space (26), **and in that** the medium inside this annular space lies with the above-mentioned pressure D2 at the end side (24) of the regulating piston adjoining the regulating chamber (26).

9. A flow regulator valve according to one of Claims 1 to 8, **characterised in that** the differential pressure regulator (11) is situated beneath the metering restrictor section (9, 10'; 4, 10'), the inflow (2) and the outflow (3) being in flow communication with the metering restrictor section via the first annular space (14) and via another fifth annular space (34) of the differential pressure regulator.

**10.** A flow regulator valve according to one of Claims 1 to 9,
**characterised in that** the through-apertures (10, 10') of the metering restrictors (9, 10; 4, 10') are longitudinally extended in the longitudinal direction of the regulating piston (7) and conically converge preferably in the direction towards the centre of the regulating piston (7), i.e. towards the centre of the cavity (8) surrounding it.

**Revendications**

**1.** Soupape de régulation de débit pour un milieu à écoulement libre, par exemple un lubrifiant, avec un étranglement de mesure réglable (9, 10 ; 4 ; 10') et avec un régulateur de pression différentielle (11) qui, au moyen d'un piston de pression différentielle, ajuste un étranglement de pression différentielle ainsi modifiable au niveau de sa section transversale, suivant une valeur de section transversale telle, que la différence de pression du milieu est maintenue au niveau de l'étranglement de mesure à une valeur constante, le régulateur de pression différentielle (11) étant à cet égard connecté parallèlement à l'étranglement de mesure, caractérisée en ce que l'étranglement de mesure connecté parallèlement au régulateur de pression différentielle (11) constitue une section d'étranglement de mesure composée de deux étranglements de mesure (9, 10 ; 4, 10') disposés de façon espacée l'un par rapport à l'autre, en ce que chacun de ces étranglements de mesure est pourvu d'une ouverture de passage (10, 10') pour le milieu, de section transversale modifiable, et en ce qu'il est prévu un élément de régulation (7) qui peut être réglable via la pression du milieu qui règne à l'intérieur de la section d'étranglement de mesure, l'élément de régulation modifiant les sections transversales de passage au niveau des deux étranglements de mesure de façon correspondante.

**2.** Soupape de régulation de débit selon la revendication 1, caractérisée en ce qu'il est prévu deux ouvertures (10, 10') dans la paroi d'un piston régulateur (7) présentant un espace creux (8) et constituant l'élément de régulation, ces ouvertures présentant dans la direction longitudinale (B-B) du piston régulateur un espace qui les sépare, en ce qu'à cet égard une première ouverture (10) relie l'alimentation (2, 15) du milieu dans la section d'étranglement de mesure à l'espace creux du piston régulateur, tandis que la seconde ouverture (10') relie l'espace creux du piston régulateur à l'évacuation (28, 3) du milieu hors de la section d'étranglement de mesure, en ce que le piston régulateur est déplaçable dans sa direction longitudinale sur des glissières de guidage (9, 4') solidaires du carter, qui, conjointement aux ouvertures (10, 10'), constituent les deux étranglements de mesure, chacune des glissières de guidage libérant, bloquant partiellement ou bloquant totalement l'ouverture lui étant associée, en fonction de la position de déplacement du piston régulateur, et en ce que des moyens sont prévus par l'intermédiaire desquels la position de déplacement du piston régulateur est réglée en fonction de la différence de pression du milieu entre les deux étranglements de mesure.

**3.** Soupape de régulation de débit selon la revendication 2, caractérisée en ce que le piston régulateur (7) est actionné au niveau d'une face frontale (27) par la pression D1 du milieu entrant (2, 15) et au niveau de l'autre face frontale (24) par la pression D2 orientée dans la direction opposée du milieu sortant et par un ressort à pression (6) avec une pression D3, sa position, en raison de la capacité de déplacement longitudinal du piston régulateur (7), s'ajustant ce faisant à l'importance de la pression s'exerçant sur lui D1, D2, D3 selon l'équation suivante

$$D1 = D2 + D3$$

**4.** Soupape de régulation de débit selon l'une des revendications 1 à 3, caractérisée en ce que le régulateur de pression différentielle (11) est d'une part soumis à la pression D4 du milieu entrant (2) via une conduite d'amenée (15"), cette conduite d'amenée (15") se séparant de la conduite (15) entre l'alimentation (2) et le premier étranglement de mesure (9, 10), et en ce que le régulateur de pression différentielle se trouve, au niveau de son autre face frontale, sous la pression D5 du milieu sortant (28, 3) et sous la pression D6 d'un ressort à pression (30), le piston du régulateur de pression différentielle (11) pouvant être déplaçable dans sa direction longitudinale par rapport au carter (1) sous l'influence des pressions précédemment mentionnées D4, D5 et D6, jusqu'à ce que la position d'équilibre du piston s'établisse suivant l'équation suivante

$$D4 = D5 + D6$$

**5.** Soupape de régulation de débit selon l'une des revendications 2 à 4, caractérisée en ce que les glissières de guidage du piston régulateur (7) sont un piston fixe (9) disposé sur le carter (1) et se trouvant côté entrée du milieu et en outre un épaulement cylindriquement creux (4') d'un piston de réglage (4), le piston de réglage (4) étant également solidaire du carter en position d'utilisation mais pouvant cependant être réglé par rapport au carter à l'aide d'un réglage par vis (5, 5') dans la direction longitudinale (B-B) du piston régulateur (7).

6. Soupape de régulation de débit selon l'une des revendications 1 à 5, caractérisée en ce qu'une autre branche de conduite (15') se sépare de la conduite d'amenée du milieu (15), qui de préférence débouche par l'intermédiaire d'un premier espace circulaire (14) entourant le régulateur de pression différentielle dans un second espace circulaire (17) entourant l'élément de régulation (7), l'ouverture associée (10) du premier étranglement de mesure (9, 10) formant ce faisant un passage pour le liquide entre l'espace creux (8) du piston régulateur et le second espace circulaire (17).

7. Soupape de régulation de débit selon l'une des revendications 1 à 6, caractérisée en ce que l'ouverture (10') de l'étranglement de mesure côté sortie (4, 10') est reliée à un troisième espace circulaire (20) qui entoure l'élément de régulation (7) et qui est relié à l'évacuation du milieu (28) vers le régulateur de pression différentielle (11).

8. Soupape de régulation de débit selon l'une des revendications 2 à 7, caractérisée en ce que l'espace creux (8) du piston régulateur (7) est relié via un orifice de passage (24) dans l'épaulement (4') du piston de réglage (4) à un quatrième espace circulaire supplémentaire (26), et en ce que le milieu à l'intérieur de cet espace circulaire, avec la pression mentionnée plus haut D2, s'appuie contre la face frontale (24) du piston régulateur jouxtant l'espace de régulation (26).

9. Soupape de régulation de débit selon l'une des revendications 1 à 8, caractérisée en ce que le régulateur de pression différentielle (11) se trouve sous la section d'étranglement de mesure (9, 10 ; 4, 10'), l'alimentation (2) et l'évacuation (3) étant respectivement reliées sur le plan de l'écoulement à la section d'étranglement de mesure par l'intermédiaire du premier espace circulaire (14) et par l'intermédiaire d'un cinquième espace circulaire supplémentaire (34) du régulateur de pression différentielle.

10. Soupape de régulation de débit selon l'une des revendications 1 à 9, caractérisée en ce que les ouvertures de passage (10, 10') des étranglements de mesure (9, 10 ; 4, 10') sont allongées dans la direction longitudinale du piston régulateur (7) et de préférence dans la direction allant vers le centre du piston régulateur (7), c'est-à-dire qu'elles se rétrécissent de façon conique dans la direction allant vers le milieu de l'espace creux (8) entouré par celui-ci.

_Fig. 1_

_Fig. 2_

_Fig. 3_

10    10´                          5

Fig. 4

10    8    10´                5        b 2

Fig. 5

VII

17  10  33  32  10´  33        4

9    8    4´    7        <u>Fig. 6</u>

D 1    10        10´        24    6

16  27        D 3  D 2    <u>Fig. 7</u>